# EUROPEAN PATENT APPLICATION

(11) **EP 1 136 398 A2**
(43) Date of publication of application: **26.09.2001**
(21) Application number: 01200850.4
(22) Date of filing: 06.03.2001
(51) Int. Cl.: B65G 23/44

(54) **Automatic chain tensioning device for mechanic chain conveyors**

(30) Priority: 14.03.2000 IT MI000004
(71) Applicant: TRASMEC S.r.l., 26011 Casalbuttano (Cremona) (IT)
(72) Inventor: Moroni, Roberto, 26011 Casalbuttano (CR) (IT)
(74) Representative: Mascioli, Alessandro

(57) **Abstract**

Automatic device for putting into tension the chains of mechanic chain conveyors, comprising at least one pusher (1) combined between at least one support (8) of one axis (9) of idle return of a chain (26) and a fixed shoulder (23), in which said pusher (1) comprises a movable stem (4) slidingly supported in a fixed cylinder (5), so as to define a pushing chamber (7) with variable volume. The pushing chamber (7) comprises devices fo bearing the pressure of a substantially incomprressible fluid container therein, that are connected to a switchboard (3) that operates a pumping central (2) if the pressure falls below a determined value.

## Description

The present invention describes an automatic device for putting into tension the chains of mechanic chain conveyors for solid, loose material of any granulometry and size, of moist, solid material, of mud or liquid, that can automatically balance the elongation of the working chain (or belt).

In systems for the transport and removal of solid or liquid materials or mud, conventionally linear mechanic conveyors are used which develop through straight, even rather long distances with one single incline, or through linear sections with different gradients or directions, united by small curved sections corresponding to the change in gradient or line.

In particular, the best known mechanic chain conveyors mainly consist of a chain of steel pressed links, provided with blades or cups for feeding the material; but this transport concept shown as a chain transport is generally used also in conveyors with metal plates, with creeping chain or with rolling conveyors.

The chain is linked between the axis of an engine, provided with at least one cogged wheel that engages the links of said chain, and an idle return axis, also provided with at least one cogged wheel for grasping the chain.

The mechanic chain conveyors are mainly divided in three kinds:
1. conveyors with one single chain immersed in the material to be moved;
2. conveyors with double chain immersed in the material to be moved, with a double idle return axis;
3. conveyors with double chain immersed or not in the material to be moved, with one single idle return axis.

In all above mentioned kinds of conveyors, the chain is subject to elongations due to the wearing of the holes in which the pins are housed for the connection between the links, to the chemical aggression of the material, causing the same effect, to the stretching of the metal, to thermal expansion etc.

For recovering said elongations and preventing breaking of the chain due to accidental contact with the casing and the frame of the conveyor, devices are used at present for putting into tension the chain which are applied to the two supports of the idle return axis'.

Said well known devices mainly comprise a pusher consisting of a threaded rod linked to the support and provided with a adjusting nut that pushes against the fixed frame.

The support is mounted onto sliding guides and therefore it will be removed during the unscrewing of the nut onto the threaded stem of the rod, causing the chain to be put into tension.

A cup spring is provided between the adjusting nut for the push and the fixed frame, for avoiding an excessive stiffness of the pusher; said spring will be partially leaded due to the force produced by the putting into tension of the chain. Therefore, the cup spring helps obtaining a more gradual putting into tension, it moves the support according to the elongation rate of the chain within its own elastic force and the pre-loading thereof, and it absorbs sudden tears of the chain due to the sudden start of the belt or to jibbings or to dirt or small pieces of material which get stuck in the throat of the return cogged wheel and cause a sudden increase of diameter with a consequent stretching of the conveyor chain.

Above described technical solution, however, shows some inconveniences and deficiencies which might invalidate or annul the positive effects of said putting into tension.

One of the maid defects consists in that the worker must intervene manually onto the nut for adjusting the traction of the chain while the chain tends to elongate. Furthermore, such an intervention is not signalled by any device that controls the correct tension, and therefore said intervention is left to the attention and effort of those assigned to the servicing who, in complex systems, have to statistically control a plurality of chain conveyors.

This inconvenience is amplified in double chain conveyors with one single idle return axis, wherein the devices for putting the chain into tension must balance the differentiated elongations of the chains, which are always greater for the chain on the side of the shaft where the engine is working. This means that in those conveyors it is very difficult to manually balance the different tensions of the two chains.

Finally, the inconveniences deriving from the mechanic nature of the elements used in the known devices for putting the chain into tension are still considerable: the springs are able to correctly work only in a limited elastic field, and this means that they ought to be chosen of a dimension and an elasticity related to the typology of the conveyor; the springs react with forces that are not constant but that are proportional to their loading; the cup springs may reach their maximum loading in case of jibbing of the chain and it is impossible to signal this event but by means of a stop that is very difficult to perform; the force required for moving the adjusting nut increases with the increase of the traction in the chain; the possibility of moving the supports is necessarily limited by the length of the threaded portion of the rod; etc.

It is the aim of the present invention to eliminate all above-mentioned inconveniences:

In particular, the main aim of the present invention consists in realizing a device for putting into tension chains that works and adjusts itself automatically in time, without requiring any manual intervention.

A further aim consists in realizing a device in which the efforts due to sudden tears of the chain may b absorbed and controlled by an adjustable system that is also independent from the working tension of the chain.

The automatic device for putting into tension the chains of mechanic chain conveyors according to the present invention mainly comprises at least one pusher connected between at least one support of an idle return axis of the chain and the fixed frame of the conveyor, wherein said pusher comprises a stem, slidingly supported in a fixed cylinder, so as to define a pushing chamber with variable volume.

For making the moving of the stem automatic according to the reduction of the tension of the chain, said pushing chamber is connected with an oleodynamic central by means of a pressure system having a predetermined value and provided with devices for the bearing of the oil pressure inside said pushing chamber, and to a switchboard for the planning out of the pressure in the pushing chamber, for the reset of said pressure to the predetermined value and the signalling of possible inconveniences.

The automatic device for putting the chain into tension according to the present invention further provides, for absorbing sudden tears of the chain, a gas shock absorber combined with the oil circuit, that allows changes in the oil volume when a determined applied pressure is exceeded, so as to permit the withdrawal of the pusher's stem.

The pressures of the oleodynamic system and of the gas shock absorber may be selectively predetermined, for allowing the use of the device according to the present invention on mechanic conveyors with different lengths and forces.

The advantages obtained by means of the device according to the present invention mainly consist in that the working tension of the chain is kept constant in time automatically; the easy bearing of fall or increase of tension of the chain by means of the pressure variations in the oleodynamic circuit of the pusher; the balancing of tension falls or jibbings or tears may be easily obtained respectively by means of oil addition or compression of the gas shock absorber; the moving of the pusher's stem may be of great extension without determining any interference with the intervention limit and with the absorption features of the gas shock absorber, as on the contrary it happens at present with the cup springs; the force applied to the chain by the pusher may be easily calibrated by means of the variation of the pressure of the oleodynamic circuit, and not through the bearing of the motion of the stem, as it should occur in the conventional mechanic devices for putting the chains into tension or, in case, in an electromechanical device; the tension forces may be easily varied according to the dimensions of the conveyor without modifying the device, but simply varying the applied pressures by means of controls and electronic adjusting means.

The present invention will be described more in detail hereinbelow relating to the enclosed drawings in which some embodiments are shown.

Figure 1 shows an axononometric scheme in a partial section of an automatic device for putting into tension the chains of mechanic chain conveyors according to the present invention, as applied to a support of an idle return shaft of a mechanic chain conveyor, the support whereof is shown in two different positions.

Figure 2 shows in an axonometric view in a partial section, the end part of a mechanic chain conveyor with a double chain and one single idle return axis, wherein two pushers are applied to the two supports of the idle return shaft.

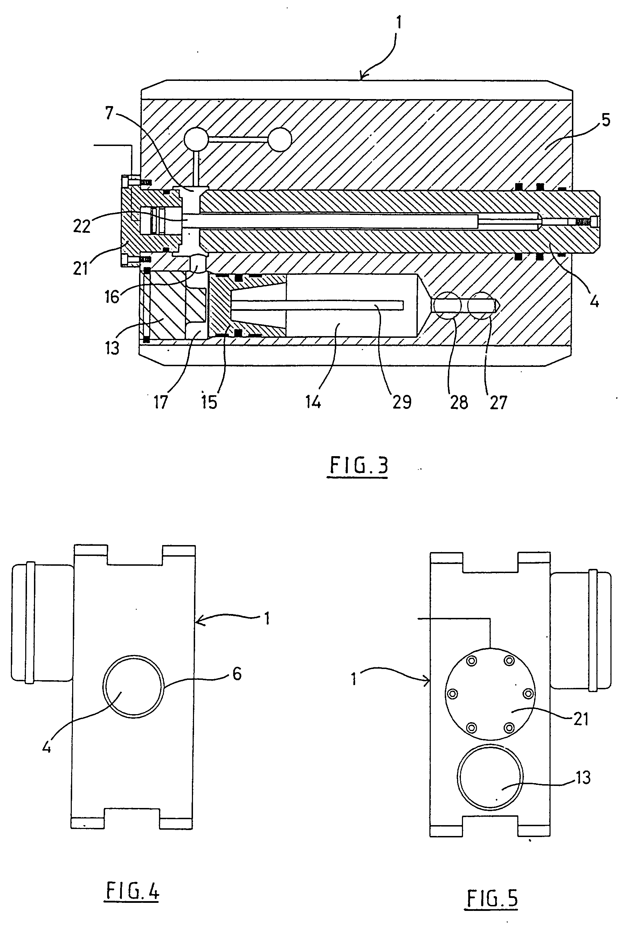

Figure 3 shows a longitudinal section of a detail of the pusher.

Figures 4 and 5 show a front and back view of the pusher according to figure 3.

Figures 6 and 7 show a scheme from top respectively of the device according to the present invention as applied to a single chain conveyor and to a double chain conveyor with double return shaft.

Relating to the details shown in the enclosed figures, the automatic device for putting into tension the chains of a mechanic chain conveyor according to the present invention, mainly comprises:
- at least one pusher 1;
- one oleodynamic central 2;
- one switchboard 3.

The pusher 1 in turn comprises a movable stem 4, slidingly supported in a fixed cylinder 5 so as to realize an oleodynamic system.

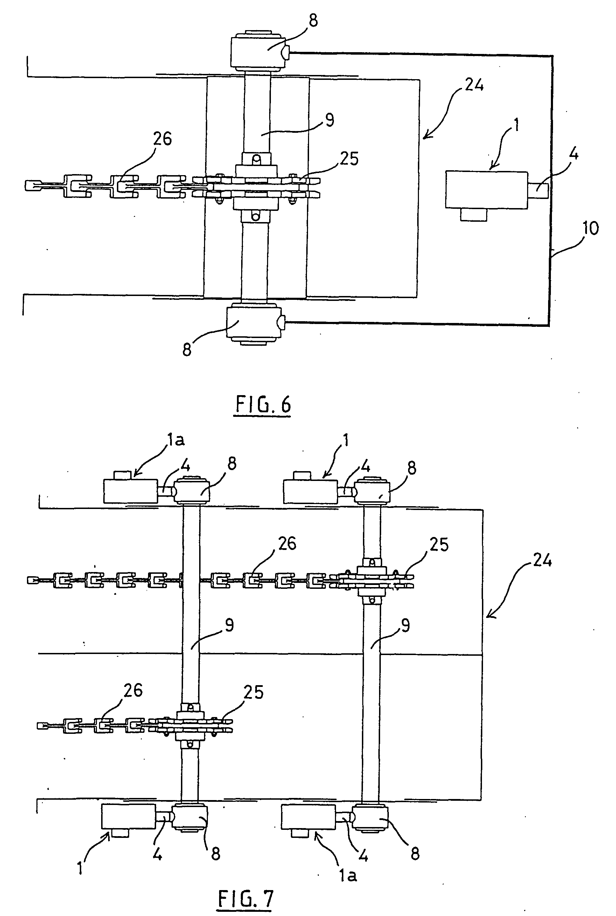

Said fixed cylinder comprises a front opening 6, from which said movable stem 4 projects, and a pushing chamber 7 with a volume variable according to the moving of said stem 4, and into which oil is introduced coming from the oleodynamic central 2, for assuring a constant pushing pressure. Said pushing chamber 7 is closed to the outside by a cap 21. Between said cap 21 and the movable stem 4 a linear transducer or know kind is linked for the bearing of the movement of said stem 4. Said stem 4 directly operates onto the supports 8 of an idle return shaft 9 to which at least one cogged wheel 25 is applied that engages the links of a chain 26. As shown in the variant of figure 6, as an alternative the movable stem 4 operated onto said supports 8 by means of a partition rod 10. The fixed cylinder 5, on the other hand, is applied to a frame 23 of a chain conveyor 24.

The oleodynamic central 2 mainly comprises a high-pressure pump 11 for the oil and an oleodynamic circuit 12 provided with known sensors, for the bearing of the oil level inside said central and of the pressure inside said pushing chamber 7.

A gas pressure damper is inserted in said oleodynamic circuit 12, said damper mainly comprising a cylindric chamber 14, filled with gas at a pressure higher than the one inside said pushing chamber 7. Said cylindric chamber 14 is closed by a movable piston 15, and on his head the pressure of the oil contained in said pushing chamber 7 is working, due to a pipe 16 that connects said pushing chamber 7 and a chamber 17 closed, on one side, by said movable piston 15 and to the outside by a cap 13. Furthermore, said cylindric chamber is provided with a valve 27 of known kind for filling in the gas, and with a sensor 28 of known kind, that co-operates with the indicator rod showing the position of said movable piston 15. The gas filling up said chamber 17 advantageously might be nitrogen,

The switchboard 3 mainly comprises an electronic computer provided with a non volatile memory and that, besides other secondary functions, is also able to calculate the data concerning the movement of said movable stem 4, the oil level inside said oleodynamic central 2, the oil pressure inside said pushing chamber 7, the gas pressure inside said cylindric chamber 14 and the movement of said movable piston 15. The switchboard 3 further comprises a viewer 18, a keyboard 19 for the insertion of data from the outside, means for the visual and/or acoustic signalling of an alarm 20 and a connection switch for the access to the data contained in the memory.

Relating now to the variant in which one single pusher operates onto the idle return shaft as shown in figure 6, the working of the automatic device for putting into tension chains of mechanic chain conveyors according to the present invention may be described as follows:
the cylindric chamber 14 of the gas pressure damper is loaded with nitrogen at a starting pressure higher than the one induced in the oil circuit for obtaining the correct tension of the conveyor chain 26.

Now the oleodynamic circuit 12 is put under pressure until a movement of said stem 4 is obtained, sufficient for assuring a correct traction of the conveyor chain.

The switchboard 3 is planned so as to assure in time, and through an oleodynamic central 2, the pressure required in the pushing chamber 7 of the oleodynamic circuit. Now a part of the inert gas is discharged from said cylindric chamber 14, so as to assure an intervention limit of the gas damper slightly higher than the working pressure of said chamber 7 of the oleodynamic circuit.
During working said switchboard 3 receives the values of the bearing relating to the movement of said movable stem 4, to the pressure of the oleodynamic circuit, to the oil level, to the position of said movable piston 15 and to the loading pressure of the gas damper; said data are worked out and compared with the planned ones; the oleodynamic central 2 receives the order of restoring the pressure inside said chamber 7 of the oleodynamic circuit, should the latter one have fallen due to a loosening of the chain; or said central is operating the signalling means in the following cases:
- when the run of the stem 4 of the pusher 1 is near to the value of the chain's pitch, for warning the maintenance service about the need of removing two links of the chain (one in the working part of the chain and another one in the return part). Should this not occur within a further predetermined elongation interval, the machine stops;
- when the pressure in said chamber 7 of the oleodynamic circuit reaches or exceeds a predetermined maximum or minimum value, as this might mean respectively that the chain is jibbing or is broken. Also in this case the machine will be stopped;
- when the oil level inside said central 2 is too low;
- when the loading pressure inside said chamber 14 of the gas damper is no longer sufficient.

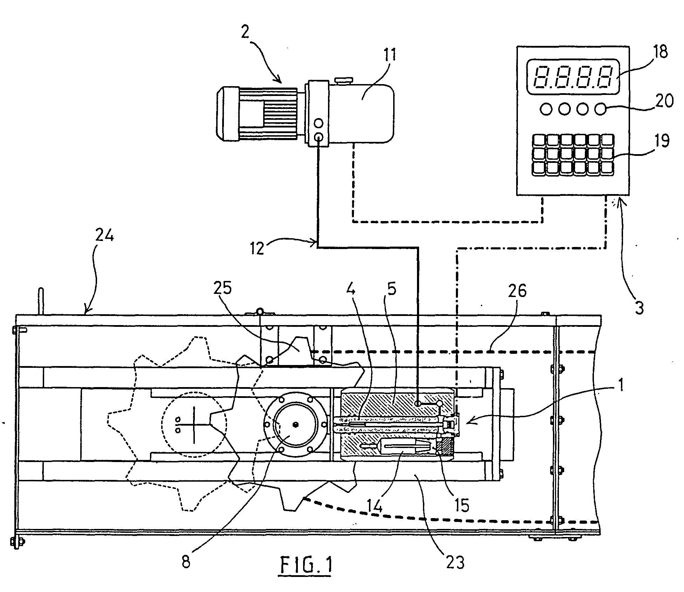

Relating to the variants shown in figures 1, 2 and 7 the device for putting into tension the chains of mechanic chain conveyors according to the present invention comprises two pushers 1 for each return axis 9, each working onto a support 8.

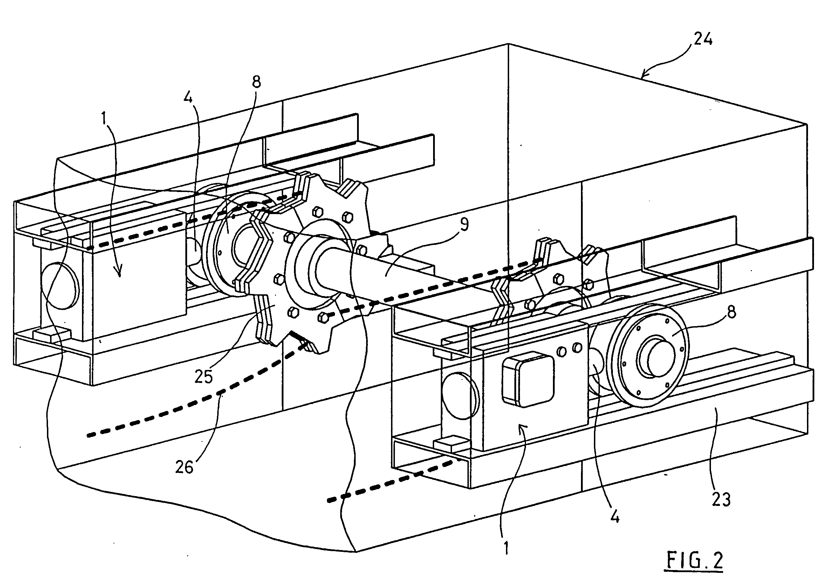

In particular, figure 7 shows how pushers 1 working onto the support nearest to the chain are active, i.e. they provide for the bearing of the pressure inside the oleodynamic circuit and transmit the same to said switchboard 3, while pushers 1a working onto the other support are auxiliary and simply reproduce the action of the active ones, thus assuring the alignment of the supports in any wearing condition of the chain.
In the variant shown in figures 1 and 2, both pushers 1 are of the active kind.

## Claims

1. An automatic device for putting into tension the chains of mechanic chain conveyors, comprising at least one pusher (1) combined between at least one support (8) of one axis (9) of idle return of a chain (26) and a fixed shoulder (23), ***characterized in that*** said pusher (1) comprises a movable stem (4) slidingly supported in a fixed cylinder (5), so as to define a pushing chamber (7) with variable volume.

2. A device according to claim 1, ***characterized in that*** said pushing chamber (7) contains a substantially incompressible fluid that is kept at a predetermined pressure through a pumping central (2) connected thereto.

3. A device according to claims 1 or 2, ***characterized in that*** said pushing chamber (7) comprises devices for bearing the pressure of the fluid container therein, connected to a switchboard (3) that operates said pumping central (2), if the pressure falls below a determined value.

4. A device according to claim 3, ***characterized in that*** said switchboard (3) comprises a programmable electronic computer for receiving the information relating to pressure and movements obtained by sensors, for working them out and emitting control signals or visual and/or acoustic signalling.

5. A device according to claim 1, ***characterized in that*** a linear moving transducer (22), connected to said switchboard (3), is combined to said movable stem (4).

6. A device according to claim 2, ***characterized in that*** a sensor of the oil level is combined to said pumping central (2).

7. A device according to claim 1, ***characterized in that*** a gas pressure damper is combined with said pushing chamber (7), said damper mainly comprising a chamber (14) containing gas at a pressure higher than the one inside said pushing chamber (7), closed by a movable piston (15) onto the head whereof acts the pressure of the oil contained in said pushing chamber (7).

8. A device according to claim 7, ***characterized in that*** a sensor of the position of said movable piston (15) is combined with said chamber (14).

9. A device according to the preceding claims, ***characterized in that*** it comprises two pushers (1, 1a) connected to two supports (8) of one single idle return axis (9), one of which is active and the other auxiliary and whereby the latter simply reproduces the action of the active one.

10. A mechanic chain conveyor (24), ***characterized in that*** it comprises an automatic device for putting the chains into tension, according to the preceding claims.
